# EUROPÄISCHE PATENTSCHRIFT

(11) **EP 1 000 698 B1**
(45) Veröffentlichungstag und Bekanntmachung des Hinweises auf die Patenterteilung: **21.05.2003**
(21) Anmeldenummer: 98811114.2
(22) Anmeldetag: 09.11.1998
(51) Int. Cl.: B23K 26/00, F01D 5/18

(54) **Gekühlte Komponenten mit konischen Kühlungskanälen**
Cooled components with conical cooling passages
Composants refroidis avec canaux coniques de refroidissement

(43) Veröffentlichungstag der Anmeldung: 17.05.2000
(73) Patentinhaber: ALSTOM (Switzerland) Ltd, 5401 Baden (CH)
(72) Erfinder: Ferber, Jörgen, 79790 Küssaberg (DE); Weigand, Bernhard, Dr., 79787 Lauchringen (DE)

(56) Entgegenhaltungen:
- EP-A- 0 287 267
- US-A- 4 737 613
- US-A- 4 818 834

## Beschreibung

### Technisches Gebiet

Die Erfindung betrifft eine thermisch hochbelastbare Komponente, welche im Betrieb mit einer Heissgasströmung beaufschlagt ist, welche Komponente mindestens eine der Heissgasströmung ausgesetzte Heissgasseite und eine der Heissgasströmung nicht ausgesetzte Kaltgasseite aufweist, in welche Komponente Kanäle eingearbeitet sind, welche die Heissgasseite und die Kaltgasseite verbinden, dergestalt, dass ein Kühlmedium von der Kaltgasseite zur Heissgasseite strömt, welches Kühlmedium während der Passage durch einen Kanal Wärme aus der Komponente aufnimmt und zur Heissgasseite abführt, wobei mindestens einer der Kühlungskanäle über seine gesamte Länge einen im Wesentlichen kreisförmigen Querschnitt aufweist, welcher Querschnitt von der Kaltgasseite zur Heissgasseite kontinuierlich zunimmt, wobei ein Öffnungshalbwinkel eingeschlossen ist, so dass der mindestens eine Kanal sich kegelstumpfförmig darstellt.

### Stand der Technik

In der modernen Technik tritt häufig der Fall auf, dass ein Bauteil von einem Medium umströmt oder überströmt wird, dessen Temperatur die im Interesse der Betriebssicherheit maximal zulässige Bauteiltemperatur bei weitem übersteigt. Exemplarisch seien die Bedingungen im Inneren von Gasturbinen-Brennkammern und in deren ersten Turbinenstufen zu nennen. Hier liegt zudem eine stark turbulente Bauteilumströmung vor, durch die der Wärmeübergang weiter intensiviert wird. Bei den im Interesse eines hohen Wirkungsgrades heute erreichten Heissgastemperaturen sind die Grenzen der einfachen Bauteilkühlung mit einer Wärmeabfuhr durch das Bauteil hindurch bei weitem überschritten.

Als wesentlich geeigneter erweisen sich Methoden, bei denen der direkte Kontakt der zu kühlenden Komponenten mit der Heissgasströmung von vornherein unterbunden wird. Bei der im Gasturbinenbau weit verbreiteten Filmkühlung wird das zu kühlende Bauteil auf einer nicht von Heissgas überströmten Seite- bei umströmten Bauteilen, wie Schaufeln, in deren Innerem - mit Kühlmedium - im allgemeinen Verdichterluft- beaufschlagt. Die Kaltgasseite und die Heissgasseite stehen durch eine Vielzahl von Kanälen miteinander in Verbindung, die auf der Heissgasseite möglichst tangential zur Heissgasströmung münden. Hierdurch wird eine Schicht kühlen Mediums auf das Bauteil aufgebracht, die den direkten Kontakt von Bauteil und Heissgasströmung unterbindet.

Eine Sonderform stellt die sogenannte "Showerhead-Kühlung" dar. Diese wird insbesondere an Stellen eingesetzt, an denen die Heissgasströmung in etwa normal auf die zu kühlende Komponente auftrifft. Dort ist es an sich unmöglich, den Kühlungskanal tangential zur Hauptströmung münden zu lassen und so einen effektiven Kühlfilm zu bilden. Hingegen wird das Kühlmedium in einem vergleichsweise steilen Winkel zur Bauteiloberfläche geführt; während des Durchströmens des Kühlungskanals nimmt das Kühlmedium Wärme aus der hochbelasteten Komponente auf. Sukzessive wird das Kühlmedium durch die Anströmung auch wieder an das Bauteil angelegt, so dass diese Kühlmethode Merkmale einer konvektiven Kühlung mit denen einer Filmkühlung vereint.

Die Fertigung der Kühlungskanäle muss aus mehreren Gründen in relativ engen Toleranzen erfolgen. Einerseits wird meist Verdichterluft als Kühlmedium eingesetzt. Daraus resultiert, dass gerade in den thermisch extrem hochbelasteten ersten Turbinenstufen nur ein geringes treibendes Druckgefälle für die Ausströmung des Kühlmediums zur Verfügung steht, speziell an Stellen, die unmittelbar von der freien Heissgasströmung angeströmt werden, und an denen sich Staupunkte der Heissgasströmung bilden, so insbesondere an der Vorderkante der ersten Schaufeln der ersten Leitreihe. Tritt nun zu wenig Kühlluft durch die Kühlungskanäle, bricht die Kühlung zusammen. Wird andererseits zuviel Kühlluft dem Kreisprozess entnommen, hat dies von vornherein negative Auswirkungen auf die Effizienz der Arbeitsmaschine.

Herkömmliche Kühlungskanäle konstanten Querschnitts zeigen insbesondere bei niedrigen Druckverhältnissen eine extrem ausgeprägte Abhängigkeit des Durchflusses vom Druckverhältnis: Die Ergebnisse experimenteller Untersuchungen zeigen, dass der Durchflusskoeffizient cd, welcher den real durchgesetzten Massenstrom zu einem für ein Druckverhältnis theoretisch erwarteten Massenstrom ins Verhältnis setzt, insbesondere im Bereich kleiner Druckverhältnisse einen starken positiven Gradienten über dem Druckverhältnis aufweist.

An den Schaufelvorderkanten insbesondere der ersten Turbinenleitreihe resultieren hieraus nicht unerhebliche Schwierigkeiten. Hier muss zwangsläufig mit einem sehr geringen Druckverhältnis operiert werden. Zudem kann der heissgasseitige Druck durch leichte Verschiebungen des Staupunktes der Anströmung erheblich variieren. Die Folge ist die latente Gefahr einer starken Reduktion des Kühlluftmassenstroms: Dies führt zu einer Bauteilüberhitzung im Bereich um den Staupunkt, und somit zu einer starken Reduktion der Lebensdauer der Komponente. Ähnlich niedrige Druckverhältnisse finden sich beispielsweise auch bei der Kühlluftausströmung an Plattformkanten.

Ein weit verbreiteter Ansatz zur Verbesserung der Kühlwirkung bei Filmkühlung ist die Ausgestaltung der Kühlungskanäle als Diffusoren. So gibt bereits die US 3,527,543, welche als nächstkommender Stand der Technik angesehen wird, Kanäle an, die sich in Durchströmrichtung des Kühlmediums mit einem Winkel von 4° bis 12° kontinuierlich erweitern, um die Kühlmittelgeschwindigkeit an der zu kühlenden Oberfläche zu vermindern, und so eine gleichmässige Verteilung des Kühlmittels auf der Bauteiloberfläche zu gewährleisten.

Aus der EP 0 648 918 B1 sind weiterhin Kühlungskanäle mit diffusorförmigem Austrittsquerschnitt bekannt, wobei der Diffusor ein Paar in Strömungsrichtung gegenüberliegender Flächen aufweist, und die stromab gelegene Kante sich in Strömungsrichtung von der anderen wegkrümmt. Zusammenfassend lässt sich die dort angegebene Kanalgeometrie so charakterisieren, dass sich an einen Kanalabschnitt mit rundem Querschnitt ein im Querschnitt rechteckiger Diffusor anschliesst, der auf der zu kühlenden Oberfläche mündet. Damit wird unter anderem erreicht, dass die unerwünschte Geschwindigkeitskomponente des austretenden Kühlmediums normal zur Bauteiloberfläche reduziert wird.

Festzustellen bleibt, dass in eine zu kühlende Komponente eine Vielzahl von Kühlungskanälen einzubringen ist, deren Durchmesser sich typischerweise in der Grössenordnung von einigen Zehntel bis wenig mehr als 1 Millimeter bewegt, und, dass dabei, gerade wenn ein definierter Diffusoreffekt angestrebt ist, eine sehr hohe Fertigungsgenauigkeit zu fordern ist. Festzustellen bleibt weiterhin, dass die Diffusorengeometrie bei einer reinen Filmkühlung erhebliche Vorteile hat, wobei an erster Stelle die bessere Benetzung der Bauteiloberfläche mit dem Kühlmedium zu nennen wäre. Festzustellen bleibt auch, dass die Wirkung des besseren tangentialen Aufbringens des Kühlmittels, wie oben skizziert, in unmittelbarer Nähe von Staupunkten der Heissgasanströmung keine signifikante Wirkung zu entfalten in der Lage ist, sondern dass an diesen Stellen wesentlich die Aufgabe besteht, dass der Kühlmittelmassenstrom bei geringem Druckverhältnis möglichst wenig vom Designmassenstrom abweichen soll.

Bei der oben skizzierten Showerhead-Kühlung nämlich ist die Reduktion der Oberflächentemperatur durch einen möglichst anliegenden Kühlfilm nicht das primäre Ziel, sondern eine möglichst effektive Abfuhr der Wärme aus dem Material mittels des durch die Kanäle strömenden Kühlmittels, weshalb in den Staupunktsbereichen der Komponenten - also beispielsweise an den Schaufelvorderkanten oder an Plattformkanten - rein zylindrische Kühlungskanäle nach wie vor das Mittel der Wahl darstellten. Um den Design-Massenstrom an Kühlmittel sicherzustellen, werden die Durchströmkanäle anhin in einem aufwendigen Prozess gefertigt: Der Hersteller erhält zunächst Vorgaben für den zu fertigenden Querschnitt der Kühlungskanäle. Die Komponente mit den eingebrachten Kühlungskanälen wird nachfolgend vermessen, indem der bei verschiedenen Druckverhältnissen durchgesetzte Massenstrom gemessen wird. Weicht dieser vom Design-Massenstrom ab, wird ein neuer Durchmesser der Kanäle bestimmt, und die Komponente wird nachgearbeitet. Dieser Prozess kann sich einige Male wiederholen, so lange, bis der Massenstrom des Kühlmittels dem erforderlichen entspricht. Hieraus resultiert ein kosten- und zeitintensiver Herstellprozess, den signifikant zu verkürzen und zu vereinfachen - und damit insbesondere erhebliche Kosten einzusparen! - ein Ziel der Erfindung ist.

Auch erhöhen Kühlbohrungen, deren Durchflussverhalten eine geringere Abhängigkeit von Abweichungen vom Auslegungspunkt aufweisen, die Betriebssicherheit einer thermisch hochbelasteten Komponente und damit die Verfügbarkeit eines technischen Systems, dessen Bestandteil diese Komponente darstellt, erheblich.

### Darstellung der Erfindung

Aufgabe der Erfindung ist es, bei einer thermisch hochbelastbaren Komponente, welche im Betrieb mit einer Heissgasströmung beaufschlagt ist, welche Komponente mindestens eine der Heissgasströmung ausgesetzte Heissgasseite und eine der Heissgasströmung nicht ausgesetzte Kaltgasseite aufweist, in welche Komponente Kanäle eingearbeitet sind, welche die Heissgasseite und die Kaltgasseite verbinden, dergestalt, dass ein Kühlmedium von der Kaltgasseite zur Heissgasseite strömt, welches Kühlmedium während der Passage durch einen Kanal Wärme aus der Komponente aufnimmt und zur Heissgasseite abführt, wobei mindestens einer der Kühlungskanäle über seine gesamte Länge einen im Wesentlichen kreisförmigen Querschnitt aufweist, welcher Querschnitt von der Kaltgasseite zur Heissgasseite kontinuierlich zunimmt, wobei ein Öffnungshalbwinkel eingeschlossen ist, so dass der mindestens eine Kanal sich kegelstumpfförmig darstellt, den mindestens einen Kühlungskanal so anzugeben, dass dessen Durchflussverhalten in möglichst geringem Ausmasse von den herrschenden Druckverhältnis und Fertigungstoleranzen abhängt, und dessen Geometrie so beschaffen ist, dass auch eine grosse Anzahl solcher Kanäle mit möglichst geringem Aufwand gefertigt werden kann.

Erfindungsgemäss wird dies dadurch erreicht, dass der Öffnungshalbwinkel des mindestens einen Kühlungskanals über die gesamte Kanaltiefe im Wesentlichen konstant ist, dass der Öffnungshalbwinkel zwischen 0.2° und 2.5° beträgt, und, dass das Querschnittsverhältnis einer Mündung des Kühlungskanals auf der Heissgasseite und einer Mündung auf der Kaltgasseite kleiner als 1.2 ist.

Kern der Erfindung ist es also, bei einer in Heissgasströmungen einsetzbaren Komponente in Bereichen, die durch eine sogenannte "Showerhead-Kühlung" gekühlt werden, die Geometrie der Kühlungskanäle so anzugeben, dass unter allen Umständen eine ausreichende Kühlung gewährleistet ist, die aufgrund der erforderlichen grossen Anzahl die Anwendung eines möglichst einfachen Herstellungsprozesses erlauben. Dies wird erreicht, indem die Kühlungskanäle in Durchflussrichtung leicht divergent gestaltet werden. Das angestrebte Ziel wird erfindungsgemäss bereits bei extrem kleinen Kanaldivergenzen erreicht. Hingegen ist eine Kanaldivergenz in dem Bereich, der normalerweise bei Filmkühlungskanälen realisiert wird, bereits ungünstig, da sich im vorliegenden Fall ein ausgeprägter Diffusoreffekt als tendenziell negativ erweist.

Weiterhin ist ein Verfahren anzugeben, mit dem die erfindungsgemässen Kanäle bei Benutzung weit verbreiteter Fertigungstechniken in einem einzigen Bearbeitungsschritt hergestellt werden können.

Es werden also im wesentlichen Kühlungskanäle vorgeschlagen, die sich in Durchströmungsrichtung leicht erweitern, und zwar mit einem wesentlich kleineren Öffnungswinkel und einem kleineren Flächenverhältnis, als es zur Erzielung der in US 3,527,543 und EP 0 648 918 B1 angestrebten Effekte notwendig wäre.

Neueste experimentelle Untersuchungen zeigen, dass im Falle eines konischen Kanals der Durchflussbeiwert über dem Druckverhältnis nahezu konstant ist. Die Kanaldivergenz ist hierbei von untergeordneter Bedeutung, weshalb vergleichsweise grosse Fertigungstoleranzen in Kauf genommen werden können. Der Diffusoreffekt - der in geringem Ausmasse selbstverständlich auftritt - ist bei den geringen Kanaldivergenzen und Flächenverhältnissen von untergeordneter Bedeutung, und berührt das Wesen der Erfindung im Übrigen nicht.

Konische Kühlungskanäle mit kreisförmigem Querschnitt lassen sich besonders einfach herstellen, wenn der Öffnungswinkel über die gesamte Kanaltiefe konstant ist. Dabei kann die Tatsache genutzt werden, dass bei der Herstellung durch Laserbohren ohnehin ein fokussierter und damit konvergentdivergenter Strahlverlauf vorliegt. Der konische Kühlungskanal wird dadurch hergestellt, dass ein fokussierter Laserstrahl hoher Leistung von der zu kühlenden Seite her auf das Bauteil aufgebracht wird, dessen Fokus weiter als die zu durchdringende Materialtiefe unterhalb der zu kühlenden Bauteiloberfläche liegt.

Wie oben bereits angedeutet, haben neueste experimentelle Untersuchungen gezeigt, dass das Durchflussverhalten der konischen Kanäle bereits bei einer geringen Konizität nur noch sehr unwesentlich von der speziellen Geometrie abhängt. Dies vereinfacht die Fertigung mittels des oben angegebenen Verfahrens nochmals deutlich, da zum einen recht grosse Toleranzen bezüglich der Divergenz eines Kühlungskanals ohne Einschränkungen der Funktion möglich sind. Weiterhin kann die Geometrie des herzustellenden Kanals in recht weiten Grenzen am Herstellungsverfahren ausgerichtet werden.

Als günstig erweist es sich, wenn der Austrittsquerschnitt des Kühlungskanals weniger als 120% des Eintrittsquerschnitts beträgt, dies einerseits aus Fertigungsgründen, damit die Veränderung der Leistungsdichte des Schneidstrahls über der zu durchdringenden Materialdicke in einem praktikablen Rahmen gehalten wird, und keine zu kurze Brennweite der eingesetzten Kollimationsoptik zu erfordern. In Verbindung hiermit ist auch zu sehen, dass der Öffnungshalbwinkel des entstehenden Hohlkonus 2.5° nicht übersteigen sollte, was weiterhin auch dazu dient, eine übermässige Verzögerung der Kühlströmung, verbunden mit möglichen Ablöseerscheinungen der Kühlströmung im Kanal, die insbesondere bei der "Showerhead-Kühlung" extrem kontraproduktiv wären, zu vermeiden.

Im Zusammenhang mit fertigungstechnischen Gesichtspunkten der Erfindung sei noch anzumerken, dass ein kreisförmiger Kanalquerschnitt zwar angestrebt wird; jedoch können auch fertigungsbedingte Abweichungen hin zu einer Ellipsen- oder Ovalform oder "Ausfransungen" der Bohrungsränder ohne Einschränkungen der Funktion in einer grossen Bandbreite toleriert werden.

### Kurze Beschreibung der Zeichnung

Nachfolgend wird die Erfindung anhand der Zeichnung näher erläutert. Es zeigen
Fig. 1 einen Teil einer gekühlten Turbinenschaufel
Fig. 2 einen Querschnitt dieser Schaufel
Fig. 3 die Druckverteilung auf der Schaufeloberfläche entlang der Saug- bzw. der Druckseite.
Fig. 4 eine Detailansicht eines Kühlungskanals konstanten Querschnittes, und den Durchflussbeiwert als Funktion des Druckverhältnisses über diesen Kanal.
Fig. 5 eine Detailansicht eines konischen Kühlungskanals, und den Durchflussbeiwert eines konischen Kühlungskanals als Funktion des Druckverhältnisses.
Fig. 6 ein Verfahren zur Herstellung konischer Kühlungskanäle mit einem Hochleistungs-Schneidlaser.

### Weg zur Ausführung der Erfindung

Die Erfindung wird anhand einer gekühlten Turbinenschaufel illustriert. Dies ist jedoch nicht in einschränkendem Sinne zu verstehen, da die Übertragung von einem heissgasumströmten Bauteil auf Komponenten, die nur auf einer Seite mit Heissgas beaufschlagt werden, wie zum Beispiel Brennkammersegmente, für den Fachmann ohne weiteres vorzunehmen ist.

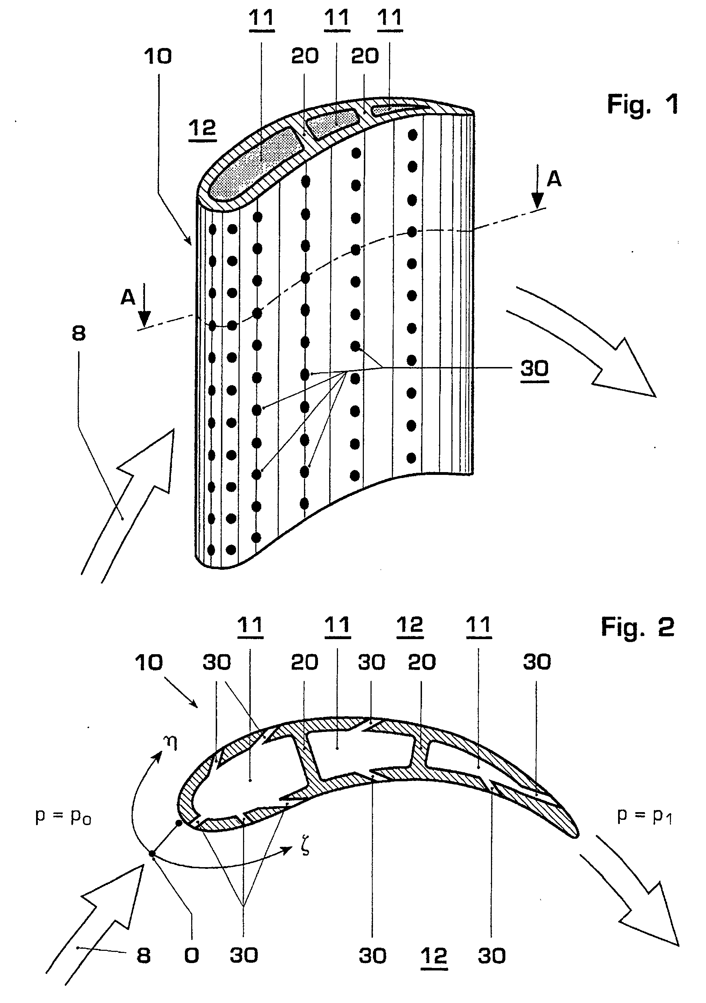

Fig. 1 zeigt ein Beispiel für die Gestaltung einer gekühlten Turbinenschaufel 10, die in Richtung der Pfeile angeströmt wird. Die Schaufel enthält Hohlräume 11, die durch Stege 20 voneinander getrennt sind. Auf der Aussenseite der Schaufel sind die Austrittsöffnungen der Kühlungskanäle 30 zu erkennen. Durch diese soll Kühlmedium aus den Hohlräumen 11 austreten und möglichst entlang der Schaufeloberfläche abströmen, und somit die Schaufel vom Heissgas im Aussenraum 12 isolieren.

Fig. 2 stellt einen Querschnitt durch eine gekühlte Schaufel dar. Die Schaufel wird in Richtung des mit 8 gekennzeichneten Pfeiles angeströmt. Der statische Druck vor der Schaufel ist p₀, nach der Schaufel p₁. Ist diese Schaufel in einer ersten Leitreihe einer Turbine eingebaut, so entspricht p₀ dem Verdichterenddruck, vermindert um den dynamischen Druck der Schaufelanströmung und Brennkammerdruckverluste. Im Punkt O befindet sich der Staupunkt der Anströmung auf der Schaufel. ξ und η sind auf der Druckrespektive Saugseite entlang der Schaufeloberfläche verlaufende Koordinaten, mit dem Ursprung in ○.

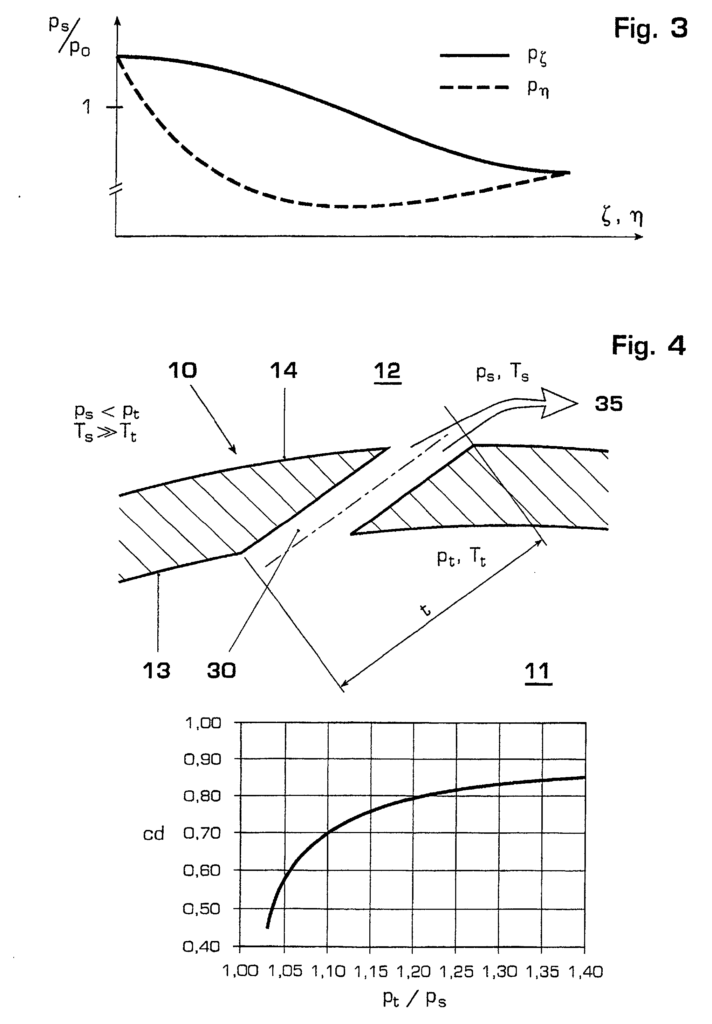

In Fig. 3 ist der prinzipielle Druckverlauf auf der Schaufeloberfläche entlang der Koordinaten ξ und η dargestellt, wobei der Druck auf den statischen Druck p₀ der Anströmung normiert ist. Erkennbar ist die Erhöhung des statischen Drucks im Staupunkt der Schaufel. Da üblicherweise Verdichterluft als Kühlmedium eingesetzt wird, resultiert gerade bei einer Schaufel einer ersten Turbinenleitreihe im Bereich des Staupunkts eine sehr geringe Druckdifferenz über die Kühlungskanäle 30. Ganz ähnliche Verhältnisse finden sich auch bei der Ausströmung im Bereich der Plattformkanten.

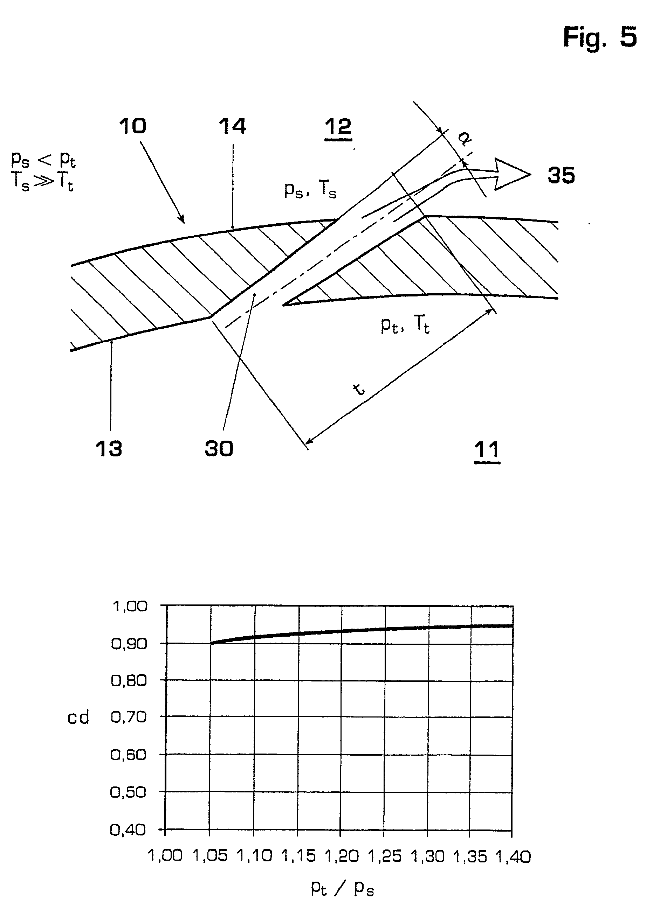

Fig. 4 und 5 zeigen den Bereich eines Kühlungskanals 30 im Detail. Im Schaufelinneren 11 herrscht der Druck pₜ und die Temperatur Tₜ, ausserhalb der Druck pₛ und die Temperatur Tₛ. Durch den Kühlungskanal 30 soll ein Luftstrom 35 vom Schaufelinnenraum 11 ausströmen, und sich als Kühlfilm über die Schaufeloberfläche 14 legen.

Zusätzlich ist jeweils der Durchflussbeiwert c_{d} des Kühlungskanals 30 als Funktion des Druckverhältnisses pₜ/ pₛ dargestellt. Dieser Durchflussbeiwert stellt das Verhältnis von real gegebenem Massenstrom und für ein Druckverhältnis theoretisch ermitteltem Massenstrom dar.

Bei dem in Fig. 4 dargestellten Fall eines Kühlungskanals mit konstantem Kreisquerschnitt ergibt sich gerade bei kleinen Druckverhältnissen eine sehr starke Abhängigkeit des Durchflussbeiwertes vom Druckverhältnis. Wie oben dargestellt, liegen gerade im Bereich der Schaufelvorderkante sehr kleine Druckverhältnisse vor. Aus einer geringen Änderung der Anströmung und damit verbunden der Lage des Staupunktes resultiert damit eine überproportionale Änderung des Kühlluftmassenstroms.

Der in Fig. 5 dargestellte Kühlungskanal zeigt einen von der Kaltgasseite 13 zur Heissgasseite 14 zunehmenden Querschnitt, mit einem konstanten Öffnungshalbwinkel α. Wie die dargestellten experimentellen Daten zeigen, ist der Durchflussbeiwert in deutlich geringerem Ausmasse vom Druckverhältnis pₜ/ pₛ abhängig.

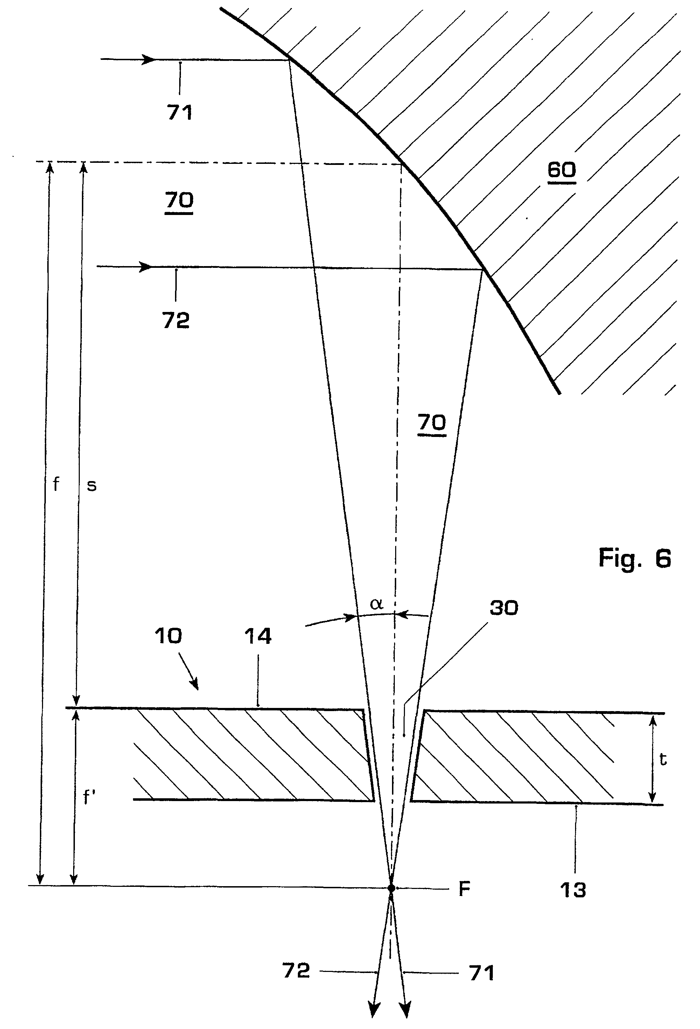

Konische Kühlungskanäle mit kreisförmigem Querschnitt können durch Laserbohren hergestellt werden, ohne dass im Vergleich zu zylindrischen Bohrungen ein Fertigungsmehraufwand notwendig wäre. In Fig. 6 ist die Herstellung eines konischen Kanals 30 durch einen nicht eingezeichneten Schneidlaser schematisch dargestellt. Der Schneidstrahl 70 ist durch seine Randstrahlen 71, 72 skizziert. Im allgemeinen wird der Strahl eines Hochleistungslasers aufgeweitet geführt. Dieser Strahl muss durch eine Optik auf einen kleineren Durchmesser abgebildet werden, um die zur Bearbeitung notwendige Leistungsdichte zu erhalten. Der aufgeweitete Strahl 70 fällt in Pfeilrichtung, von links, ein, und trifft auf eine Fokussierungsoptik, im Beispiel durch einen Spiegel 60 dargestellt. Der Einbau weiterer Komponenten wie beispielsweise Blenden im Strahlengang, oder der Ersatz des im Beispiel dargestellten einzelnen Spiegels durch ein Spiegelsystem oder durch Linsen, ist in diesem Rahmen ohne jegliche Relevanz.

Aus der notwendigen Strahlkollimation resultiert ein konvergenter Strahl mit dem Brennpunkt F, der den Halbwinkel α einschliesst. Soll nun eine parallele oder annährend parallele Bohrung hergestellt werden, so sind weitere optische Komponenten notwendig, um einen Schneidstrahl vernachlässigbarer Konvergenz oder Divergenz zu erhalten. Beim Verfahren zur Herstellung konischer Kühlluftbohrungen wird die Brennweite f der Fokussierungsoptik 60 so gewählt, dass der Schneidstrahl 70 den gewünschten Halbwinkel α einschliesst, und mit eben dieser Strahlgeometrie auf das Werkstück 10 auftrifft. Je nachdem, ob der Abstand s zwischen Kollimationsoptik 60 und Werkstückoberfläche 14 grösser oder kleiner als die Brennweite f der Kollimationsoptik ist, und ob in letzterem Fall der Abstand f' des Brennpunktes F von der Werkstückoberfläche 14 grösser oder kleiner als die zu durchdringende Materialstärke t ist, entstehen unterschiedliche Querschnittsverläufe der Bohrung. Im Ausführungsbeispiel ist die Oberfläche 14 des Werkstücks 10 die Heissgasseite. In diesem Fall wird zur Herstellung der erfindungsgemässen Kühlungskanäle der Abstand s zwischen Werkstückoberfläche 14 und Kollimationsoptik 60 um mindestens die zu durchdringende Materialstärke t kleiner gewählt als die Brennweite f der Kollimationsoptik 60. Auf diese Weise entsteht der gewünschte Querschnittsverlauf der Bohrung 30 in einem Arbeitsschritt.

### Bezugszeichenliste

- 8: Heissgasanströmung
- 10: Komponente, die im Betrieb mit einer Heissgasströmung beaufschlagt ist
- 11: Raum, durch den das Kühlmedium geführt wird
- 12: Heissgasraum
- 13: nicht mit Heissgas beaufschlagte Oberfläche (Kaltgasseite)
- 14: mit Heissgas beaufschlagte Oberfläche (Kaltgasseite)
- 20: Steg
- 30: Fimlegerkanal
- 35: Strömung des Kühlmediums
- 60: Kollimationsoptik
- 70: Schneidstrahl
- 71: Randstrahl
- 72: Randstrahl
- f: Brennweite der Kollimationsoptik
- f': Abstand des Brennpunktes des Schneidstrahls von der Werkstückoberfläche
- s: Abstand einer Werkstückoberfläche von der Kollimationsoptik
- t: zu durchdringende Materialstärke, identisch mit der Länge des Kühlungskanals
- F: Brennpunkt des Schneidstrahls
- ○: Staupunkt der Heissgasanströmung
- α: Öffnungshalbwinkel
- ξ: konturangepasste Koordinate
- η: konturangepasste Koordinate

## Patentansprüche

1. Thermisch hochbelastbare Komponente (10), welche im Betrieb mit einer Heissgasströmung (8) beaufschlagt ist, welche Komponente mindestens eine der Heissgasströmung (8) ausgesetzte Heissgasseite (14) und eine der Heissgasströmung nicht ausgesetzte Kaltgasseite (13) aufweist, in welche Komponente Kanäle (30) eingearbeitet sind, welche die Heissgasseite (14) und die Kaltgasseite (13) verbinden, dergestalt, dass ein Kühlmedium (35) von der Kaltgasseite (13) zur Heissgasseite (14) strömt, welches Kühlmedium (35) während der Passage durch einen Kanal (30) Wärme aus der Komponente (10) aufnimmt und zur Heissgasseite (14) abführt, wobei mindestens einer der Kühlungskanäle (30) über seine gesamte Länge einen im Wesentlichen kreisförmigen Querschnitt aufweist, welcher Querschnitt von der Kaltgasseite (13) zur Heissgasseite (14) kontinuierlich zunimmt, wobei ein Öffnungshalbwinkel (α) eingeschlossen ist, so dass der mindestens eine Kanal (30) sich kegelstumpfförmig darstellt, wobei der Öffnungshalbwinkel (α) des mindestens einen Kühlungskanals (30) über die gesamte Kanaltiefe (t) im Wesentlichen konstant ist, **dadurch gekennzeichnet, dass** der Öffnungshalbwinkel (α) zwischen 0.2° und 2.5° beträgt, und, dass das Querschnittsverhältnis einer Mündung des Kühlungskanals (30) auf der Heissgasseite (14) und einer Mündung auf der Kaltgasseite (13) kleiner als 1.2 ist.

2. Verfahren zur Herstellung von Kühlungskanälen in thermisch hochbelastbaren Komponenten nach Anspruch 1 durch Laserbohren, wobei ein fokussierter Laserstrahl hoher Leistung (70) konvergent auf die Heissgasseite (14) auftrifft, **dadurch gekennzeichnet, dass** dessen Fokus (F) mindestens um die zu durchdringende Materialstärke (t) unterhalb der Heissgasseite liegt.

## Claims

1. Component (10) which can be subjected to high thermal loading and to which a hot-gas flow (8) is admitted during operation, which component has at least one hot-gas side (14) exposed to the hot-gas flow (8) and a cold-gas side (13) not exposed to the hot-gas flow, in which component passages (30) are made, which passages (30) connect the hot-gas side (14) and the cold-gas side (13) in such a way that a cooling medium (35) flows from the cold-gas side (13) to the hot-gas side (14), which cooling medium (35), when passing through a passage (30), absorbs heat from the component (10) and draws it off to the hot-gas side (14), at least one of the cooling passages (30) having an essentially circular cross section over its entire length, which cross section increases continuously from the cold-gas side (13) to the hot-gas side (14), an opening half angle (α) being enclosed, so that the at least one passage (30) appears frustoconical, the opening half angle (α) of the at least one cooling passage (30) being essentially constant over the entire passage depth (t), **characterized in that** the opening half angle (α) is between 0.2° and 2.5°, and **in that** the cross-sectional ratio of an orifice of the cooling passage (30) on the hot-gas side (14) and an orifice on the cold-gas side (13) is less than 1.2.

2. Method of producing cooling passages in components which can be subjected to high thermal loading according to Claim 1 by laser drilling, a focused laser beam (70) of high power striking the hot-gas side (14) in a convergent manner, **characterized in that** the focal point (F) of the laser beam (70) lies below the hot-gas side by at least the material thickness (t) to be penetrated.

## Revendications

1. Composant (10) pouvant supporter une forte charge thermique, qui est exposé en service à un courant de gaz chauds (8), composant qui présente au moins une face à gaz chauds (14) exposée au courant de gaz chauds (8) et une face à gaz froids (13) non exposée au courant de gaz chauds, composant dans lequel sont usinés des canaux (30) qui relient la face à gaz chauds (14) et la face à gaz froids (13), de telle manière qu'un fluide de refroidissement (35) circule de la face à gaz froids (13) vers la face à gaz chauds (14), fluide de refroidissement (35) qui soutire de la chaleur du composant (10) pendant son passage à travers un canal (30) et l'évacue vers la face à gaz chauds (14), dans lequel au moins un des canaux de refroidissement (30) présente sur toute sa longueur une section transversale sensiblement circulaire, section transversale qui augmente de façon continue de la face à gaz froids (13) vers la face à gaz chauds (14), dans lequel un demi-angle d'ouverture (α) est formé de telle manière que le au moins un canal (30) ait la forme d'un tronc de cône, dans lequel le demi-angle d'ouverture (α) du au moins un canal de refroidissement (30) est sensiblement constant sur toute la profondeur (t) du canal, **caractérisé en ce que** le demi-angle d'ouverture (α) vaut entre 0,2° et 2,5° et **en ce que** le rapport de section transversale d'une embouchure du canal de refroidissement (30) dans la face à gaz chauds (14) à une embouchure dans la face à gaz froids (13) est inférieur à 1,2.

2. Procédé pour la fabrication de canaux de refroidissement dans des composants pouvant supporter une forte charge thermique suivant la revendication 1 par perçage au laser, dans lequel on envoie un faisceau laser à haute puissance convergent focalisé (70) sur la face à gaz chauds (14), **caractérisé en ce que** son foyer (F) est situé en dessous de la face à gaz chauds au moins à une distance égale à l'épaisseur de matière à traverser (t).
